# EUROPÄISCHE PATENTSCHRIFT

(11) **EP 0 427 983 B1**
(45) Veröffentlichungstag und Bekanntmachung des Hinweises auf die Patenterteilung: **16.02.1994**
(21) Anmeldenummer: 90120355.4
(22) Anmeldetag: 24.10.1990
(51) Int. Cl.: F16D 13/70, F16F 15/12

(54) **Geteiltes Schwungrad mit einer Federn enthaltenden Dämpfungseinrichtung**
Two mass flywheel assembly with spring damping device
Volant d'inertie en deux parties avec dispositif d'amortissement à ressorts

(30) Priorität: 14.11.1989 DE 3937802
(43) Veröffentlichungstag der Anmeldung: 22.05.1991
(73) Patentinhaber: Volkswagen Aktiengesellschaft, 38436 Wolfsburg (DE)
(72) Erfinder: Schlaf, Dag-Arnulf, Dipl.-Ing., W-3300 Braunschweig (DE); Alt, Wilfried, W-3302 Cremlingen (DE)

(56) Entgegenhaltungen:
- FR-A- 2 593 252
- GB-A- 2 217 429

## Beschreibung

Die Erfindung betrifft eingeteiltes Schwungrad gemäß dem Oberbegriff des Patentanspruchs 1. Bei einem aus der DE-OS 38 07 937 bekannten geteilten Schwungrad dieses Aufbaus, das mit einer schaltbaren Kupplung zusammengefaßt ist, wird der torusförmige Hohlraum durch zwei relativ kompliziert geformte Profilteile begrenzt, und zur reibungsarmen Abstützung der Federn dienen sowohl in Umfangs- als auch in Querrichtung gebogene, einen Verschleißschutz darstellende Einlagen. Eines der beiden den torusförmigen Hohlraum begrenzenden Profilteile trägt auf seinem Außenmantel einen ein separates Teil darstellenden Anlasserzahnkranz.

Der Erfindung liegt die Aufgabe zugrunde, ein gattungsgemäßes geteiltes Schwungrad unter Wahrung der günstigen Eigenschaften desselben zu schaffen, das hinsichtlich des Herstellungsaufwands vereinfacht ist.

Die erfindungsgemäße Lösung dieser Aufgabe besteht in den kennzeichnenden Merkmalen des Patentanspruchs 1, vorteilhafte Ausbildungen der Erfindung beschreiben die Unteransprüche.

Während bei dem oben beschriebenen Stand der Technik zur Bildung des torusförmigen Hohlraums also zwei kompliziert geformte, vorzugsweise durch Gießen mit anschließender Nachbehandlung hergestellte Profilteile zusammen mit geformten Einlagen dienen, erfordert die erfindungsgemäße Konstruktion lediglich ein im wesentlichen ring- oder zylinderringförmiges Profilteil sowie zwei einfach herzustellende Blechteile zur Gewinnung des etwa torusförmigen Hohlraums. Dadurch wird auch eine axiale Verkürzung des geteilten Schwungrads möglich.

In dieses einzige Profilteil kann gemäß Anspruch 2 in vorteilhafter Weise unter Verzicht auf ein selbständiges Teil der Anlasserzahnkranz eingeformt sein.

In vielen Fällen ist es erwünscht, eine Drehmomentbegrenzung nach Art einer Rutschkupplung mit Reibflächen zu haben, um eine übertragung unerwünscht hoher Drehmomente zu unterbinden. Raum- und bauteilsparende Weiterbildungen der Erfindung gemäß den Ansprüchen 3, 4 und 5 beziehen sich auf das Vorsehen einer derartigen Rutschkupplung in dem geteilten Schwungrad, wobei gemäß Anspruch 6 der zur Bildung einer der Reibflächen dienende Bügel auch zur Lösung einer Lageraufgabe für eine der Drehmassen herangezogen wird.

Ein Ausführungsbeispiel der Erfindung wird im folgenden anhand der Zeichnung erläutert, deren
- Fig. 1: einen Axialschnitt und deren
- Fig. 2: im wesentlichen die in Fig. 1 bei II angedeutete Stirnansicht zeigt.

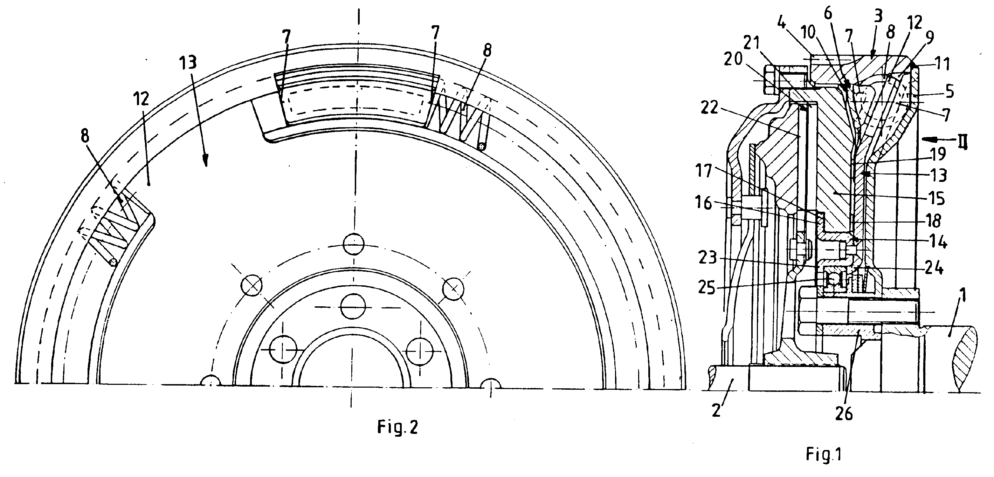

In der Zeichnung ist ein mit einer schaltbaren Kupplung verbundenes geteiltes Schwungrad für den Einsatz zwischen einer die Abtriebswelle 1 besitzenden Brennkraftmaschine und einem die Eingangswelle 2 aufweisenden Schaltgetriebe wiedergegeben. Betrachtet man zunächst die drehfest mit der Welle 1 verbundene erste Schwungmasse, so enthält sie als wesentliche Bestandteile das Profilteil 3, in das bei 4 ein Anlasserzahnkranz eingearbeitet ist, das - übrigens in der Darstellung der Fig. 2 entfernte - deckelartige Blechformteil 5 sowie das weitere Blechformteil 6, das ebenso wie das Formteil 5 durch Abstellungen gewonnene Anschläge 7 für auf einem gemeinsamen Kreisbogen angeordnete Federn 8 bildet, die in dem von den Teilen 3, 5 und 6 gebildeten torusförmigen Hohlraum 9 verlaufen. Wie bei 10 und 11 erkennbar, sind die beiden Blechformteile 5 und 6 im Bereich ihrer radial äußeren Ränder mit dem Profilteil 3 durch Schweißen verbunden, und zwar zweckmäßigerweise dicht, so daß der Hohlraum 9 mit einem Fett gefüllt sein kann.

Die Federn 8 sind jeweils zwischen einem der Anschläge 7 an der einen Schwungmasse und Anschlägen 12 der nun zu beschreibenden anderen Schwungmasse eingespannt, wobei diese Anschläge 12 durch radiale Fortsätze an der Scheibe 13 gewonnen sind und in Umfangsrichtung die gleiche Erstreckung wie die Anschläge 7 besitzen. Diese Scheibe 13 ist, wie bemerkt, ein wesentlicher Bestandteil der anderen Schwungmasse; an der Scheibe 13 ist über den Bügel 14 der Bestandteil 15 dieser Schwungmasse gehalten, und zwar besitzt der Bügel 14 einen in Fig. 1 nach oben weisenden Steg (bzw. in Umfangsrichtung mehrere Stege) 16, der unter Zwischenfügung der Reibfläche 17 den Schwungmassenbestandteil 15 gegen die weiteren Reibflächen 18 und 19 drückt. Damit bewirkt der Bügel 14 also eine in Umfangsrichtung reibschlüssige Verbindung der beiden Teile 13 und 15; beim Auftreten eines in die Welle 1 eingeleiteten Drehmoments, das eine vorgegebene Größe übersteigt, erfolgt unter Aufhebung dieses Reibschlusses eine Relativdrehung zwischen den beiden Teilen 13 und 15.

Zwecks besserer Wärmeabfuhr sind die Reibflächen in Umfangsrichtung unterbrochen.

Das Teil 15 ist bereits Bestandteil der allgemein mit 20 bezeichneten Schaltkupplung mit den Reibbelägen 21 und 22. Dadurch, daß die Reibfläche 17 dieser Schaltkupplung unmittelbar benachbart liegt, und zwar außerhalb der radialen Erstreckung der Reibbeläge 21 und 22, ist eine gute Abfuhr der bei der Reibung auftretenden Wärme sichergestellt.

Der Bügel 14 löst nun noch eine weitere Aufgabe: Er ist im Längsschnitt etwa Ω-förmig gestaltet, d. h. besitzt einen entgegengesetzt zu dem Schenkel 16 verlaufenden weiteren Schenkel 23, der zusammen mit Fortsätzen 24 am inneren Rand der Scheibe 13 eine axiale Einspannung des Kugellagers 25 bewirkt. Über das Kugellager 25 ist die zweite Schwungmasse mit den Teilen 13 und 15 drehbar auf der Hülse 26 gelagert, die ihrerseits die drehfeste Verbindung des Blechteils 5 mit der Welle 1 bildet.

Betrachtet man nochmals die den torusförmigen Hohlraum 9 umschließenden Teile, so ist das einzige Profilteil der Ring bzw. Zylinderring 3. Man wird ihn aus Stahl beispielsweise als Gußteil, aus einem Rohrabschnitt oder aus gerolltem und stumpf verschweißtem Bandstahl fertigen, wobei darauf zu achten ist, daß seine Auflagefläche für die Federn 8 verschleißfest ist, da die Erfindung auf Einlagen an dieser Stelle verzichtet. Die beiden Blechteile 5 und 6 bedürfen zu ihrer Herstellung lediglich Stanz- und Biegebearbeitungen, nicht jedoch einer spanabhebenden Formgebung, so daß sie außerordentlich preisgünstig herzustellen sind und der Raumbedarf für sie minimal ist. Alle Reibflächen einschließlich der Reibbeläge der schaltbaren Kupplung liegen relativ frei, so daß auf zusätzliche Wärmeabschirmbleche oder dergleichen verzichtet werden kann.

Mit der Erfindung ist demgemäß ein gattungsgemäßes geteiltes Schwungrad geschaffen, das sich durch eine besonders einfache Herstellung auszeichnet.

## Patentansprüche

1. Geteiltes Schwungrad mit einer ersten (3, 5, 6) und einer zweiten (13, 15) Schwungmasse, von denen die erste (3, 5, 6) für den drehfesten Anschluß einer antreibenden Welle, insbesondere der Ausgangswelle (1) einer Brennkraftmaschine, die zweite (13, 15) für den drehfesten Anschluß einer angetriebenen Welle, insbesondere der Eingangswelle (2) eines Getriebes, eingerichtet ist und die in Drehverbindung über eine Dämpfungseinrichtung stehen, die in einem torusförmigen Hohlraum (9) einer der Schwungmassen (3, 5, 6) längs Kreisbögen gekrümmt verlaufende Federn (8) enthält, die sich mit ihren Enden an jeweils einer der Schwungmassen (3, 5, 6; 13, 15) zugeordneten Anschläge (7, 12) in Umfangsrichtung sowie in radialen Richtungen an Wandbereichen des torusförmigen Hohlraums (9) abstützen, dadurch gekennzeichnet, daß der torusförmige Hohlraum (9) in radialen Richtungen durch ein Profilteil (3) mit gehärteten Wandbereichen zur direkten Abstützung der Federn (8) und in axialer Richtung durch zwei die Federn (8) sowie ein die Anschläge (12) der anderen Schwungmasse tragendes Teil (13) derselben axial zwischen sich einschließende Blechformteile (5, 6) gebildet ist, die im Bereich ihrer radial äußeren Ränder mit dem Profilteil (3) verschweißt (10, 11) sind und von denen zumindest eines (5) die Anschläge (7) der ersten Schwungmasse (3, 5, 6) bildet.

2. Schwungrad nach Anspruch 1, dadurch gekennzeichnet, daß in das Profilteil (3) ein Anlasserzahnkranz (4) eingeformt ist.

3. Schwungrad nach Anspruch 1 oder 2, dadurch gekennzeichnet, daß das eine Teil (13) der anderen Schwungmasse scheibenförmig ist und in reibschlüssiger Drehverbindung mit einem weiteren Bestandteil (15) der anderen Schwungmasse steht.

4. Schwungrad nach Anspruch 3, dadurch gekennzeichnet, daß die reibschlüssige Drehverbindung an dem einen Teil (13) zumindest einen Bügel (14) enthält, der einen inneren Randbereich des weiteren Bestandteils (15) mit einer ersten Reibfläche (17) hintergreift und diesen axial gegen eine zweite Reibfläche (18, 19) an dem einen Teil (13) drückt.

5. Schwungrad nach Anspruch 4, dadurch gekennzeichnet, daß der weitere Bestandteil (15) auch Teil einer schaltbaren Kupplung (20) und die erste Reibfläche (17) dieser benachbart ist.

6. Schwungrad nach Anspruch 4 oder 5, dadurch gekennzeichnet, daß der Bügel (14) zusammen mit einem Fortsatz (24) des einen Teils (13) eine Aufnahme für ein reibungsarmes Lager (25) für die andere Schwungmasse bildet.

## Claims

1. A divided flywheel having a first (3, 5, 6) and a second (13, 15) flywheel mass, of which the first (3, 5, 6) for the non-rotatable connection of a driven shaft, in particular of the output shaft (1) of an internal combustion engine, the second (13, 15) for the non-rotatable connection of a driven shaft, in particular the input shaft (2) of a gear, is arranged and which are connected in a rotatable manner by way of a damping device, which damping device comprises in a toroidal hollow space (9) of one of the flywheel masses (3, 5, 6) springs (8) which extend in a curved manner along the arc of a circle, which springs are supported by their ends at stops (7, 12) allocated in each case to one of the flywheel masses (3, 5, 6; 13, 15) in a peripheral direction as well as in radial directions at wall regions of the toroidal hollow space (9), characterised in that the toroidal hollow space (9) is formed in the radial directions by virtue of a profiled part (3) with hardened wall regions for the purpose of directly supporting the springs (8) and in the axial direction by virtue of two metal formed parts (5, 6) which enclose axially between themselves the springs (8) as well as a part (13) of same supporting the stops (12) of the other flywheel mass, which metal formed parts are welded in the region of their radial outer edges to the profiled part (3) and from which metal formed parts (5, 6) at least one (5) forms the stops 7 of the first flywheel mass (3, 5, 6,).

2. A flywheel according to claim 1, characterised in that a starter ring gear (4) is formed in the profiled part (3).

3. A flywheel according to claim 1 or 2, characterised in that one part (13) of the other flywheel mass is disk-shaped and is rotably connected in a frictionally-engaged manner to a second component (15) of the other flywheel mass.

4. A flywheel according to claim 3, characterised in that the frictionally-engaged rotatable connection to one part (13) comprises at least one curved piece of metal (14) which grips behind an inner edge region of the second component (15) having a first friction area (17) and presses this second component (15) axially against a second friction area (18, 19) at the first part (13).

5. A flywheel according to claim 4, characterised in that the second component (15) is also part of a switchable coupling (20) and the first friction area (17) is adjacent to the switchable coupling (20).

6. A flywheel according to claim 4 or 5, characterised in that the curved piece of metal (14) together with an extension piece (24) of one part (13) forms a receiving device for a frictionally-low bearing (25) for the other flywheel mass.

## Revendications

1. Volant d'inertie divisé comprenant une première masse d'inertie (3, 5, 6) et une seconde masse d'inertie (13, 15), la première (3, 5, 6) de celles-ci étant conçue pour être reliée, de façon solidaire en rotation, à un arbre menant, notamment à l'arbre de sortie (1) d'un moteur à combustion interne, et la seconde (13, 15) étant conçue pour être reliée, de façon solidaire en rotation, à un arbre mené, notamment à l'arbre d'entrée (2) d'une transmission, les masses d'inertie étant en liaison de rotation l'une avec l'autre par l'intermédiaire d'un dispositif amortisseur comprenant des ressorts (8) incurvés s'étendant selon des arcs de cercle à l'intérieur d'une cavité torique (9) ménagée dans l'une des masses d'inertie (3, 5, 6), les ressorts s'appuyant, par leurs extrémités, dans le sens de la circonférence, sur des butées (7, 12) respectivement associées à l'une des masses d'inertie (3, 5, 6; 13, 15) et, dans des sens radiaux, sur les zones de paroi de la cavité torique (9),
caractérisé en ce que la cavité torique (9) est définie suivant des directions radiales par une pièce profilée (3) présentant des zones de paroi trempées pour le support direct des ressorts (8), et, dans le sens axial, par deux pièces (5, 6) en tôle emboutie enfermant entre elles, dans le sens axial, les ressorts (8) et une pièce (13) de l'autre masse d'inertie, portant les butées (12) de celle-ci, les pièces en tôle emboutie étant soudées (10, 11) sur la pièce profilée (3), au niveau de leurs bords radialement extérieurs, et au moins l'une (5) des deux pièces formant les butées (7) de la première masse d'inertie (3, 5, 6).

2. Volant d'inertie selon la revendication 1, caractérisé en ce qu'une couronne dentée (4) de démarreur est venue de moulage avec la pièce profilée (3).

3. Volant d'inertie selon la revendication 1 ou 2, caractérisé en ce que l'une (13) des pièces de l'autre masse d'inertie se présente sous forme d'un disque et se trouve en liaison de rotation, avec entraînement par friction, avec un autre élément constitutif (15) de l'autre masse d'inertie.

4. Volant d'inertie selon la revendication 3, caractérisé en ce que la liaison de rotation avec entraînement par friction comporte au moins un étrier (14) sur ladite pièce (13), qui s'engage derrière une zone marginale intérieure de l'autre élément constitutif (15), comportant une première face (17) de frottement, et la comprime axialement contre une seconde face (18, 19) de frottement ménagée sur ladite pièce (13).

5. Volant d'inertie selon la revendication 4, caractérisé en ce que l'autre élément constitutif (15) fait également partie d'un embrayage (20), et en ce que la première face (17) de frottement est adjacente à celui-ci.

6. Volant d'inertie selon la revendication 4 ou 5, caractérisé en ce que l'étrier (14) forme, conjointement avec un prolongement (24) de ladite pièce (13), un logement d'un palier (25) à faible frottement pour l'autre masse d'inertie.
